## Europäisches Patentamt
## European Patent Office
## Office européen des brevets

(19)

(11) Numéro de publication: **0 216 665 B1**

---

(12) **FASCICULE DE BREVET EUROPEEN**

(45) Date de publication du fascicule du brevet:
**14.03.90**

(51) Int. Cl.⁴: **G21C 7/12**, G21C 9/02, G21C 7/20

(21) Numéro de dépôt: **86401830.4**

(22) Date de dépôt: **18.08.86**

(54) **Elément absorbant pour réacteur nucléaire à neutrons rapides.**

---

(30) Priorité: **22.08.85  FR 8512621**

(43) Date de publication de la demande:
**01.04.87 Bulletin 87/14**

(45) Mention de la délivrance du brevet:
**14.03.90 Bulletin 90/11**

(84) Etats contractants désignés:
**BE DE GB IT**

(56) Documents cités:
**FR-A- 2 251 079
FR-A- 2 506 061
US-A- 4 019 954**

(73) Titulaire: **COMMISSARIAT A L'ENERGIE ATOMIQUE,
31/33, rue de la Fédération, F-75015 Paris(FR)**

(72) Inventeur: **Verset, Louis, 49 ter Avenue St.Jérôme
Bât.E-Les Cerisiers, F-13100 Aix-en-Provence(FR)**

(74) Mandataire: **Mongrédien, André et al, c/o
BREVATOME 25, rue de Ponthieu, F-75008 Paris(FR)**

## Description

La présente invention concerne un élément absorbant pour réacteur nucléaire à neutrons rapides, notamment un élément destiné à être introduit dans le coeur d'un réacteur nucléaire à neutrons rapides pour assurer l'arrêt dudit réacteur indépendamment du système de pilotage.

Dans les réacteurs nucléaires, le pilotage, c'est-à-dire le contrôle de la puissance fournie par le coeur, consiste à introduire plus ou moins des éléments réalisés en un matériau absorbant les neutrons parmi les assemblages de combustible nucléaire. L'ensemble de ces éléments, appelés "barres de commande", forme le système de commande principale (S.C.P.). Pour des raisons de fiabilité, des éléments absorbants sont spécialement conçus pour assurer l'arrêt du réacteur en cas de défaillance du S.C.P. Ces éléments forment le système d'arrêt complémentaire (S.A.C.). On décrira l'invention en prenant l'exemple d'un élément absorbant d'arrêt complémentaire, mais elle peut également s'appliquer à une barre de commande du S.C.P.

Dans un réacteur à neutrons rapides, les éléments absorbants comprennent généralement un boîtier creux, d'axe vertical ouvert à son extrémité supérieure, et un ensemble mobile apte à se déplacer verticalement dans le boîtier et dont le corps est réalisé en un matériau absorbant les neutrons. Le boîtier présente une section extérieure semblable à celle des assemblages de combustibles nucléaires, par exemple hexagonale, de façon à être disposé parmi ces assemblages. L'ensemble mobile comporte une tête par laquelle il est normalement suspendu à un électroaimant. Ce dernier est monté à l'extrémité inférieure d'une tige de manoeuvre dont le déplacement parallèlement à son axe vertical est commandé par un mécanisme approprié. Lorsqu'on désire arrêter la réaction de fission dans le coeur du réacteur, on interrompt l'alimentation électrique de l'électroaimant, de façon à faire chuter par gravité l'ensemble mobile à l'intérieur du boîtier.

Un réacteur nucléaire à neutrons rapides équipé d'éléments absorbants de ce type est décrit dans le brevet français FR-A 2 251 079 au nom du Commissariat à l'Energie Atomique. De façon plus précise, ce brevet concerne des éléments absorbants dans lesquels l'ensemble mobile reste toujours en totalité à l'intérieur du boîtier, même lorsqu'il est en position haute. Grâce à cette configuration, l'ensemble mobile se détache de l'électro-aimant auquel il est suspendu, lorsqu'un décalage se produit entre l'axe vertical de la tige de manoeuvre et l'axe de la partie supérieure de l'élément absorbant, par suite d'une déformation du coeur. Une telle déformation conduit donc automatiquement à la chute de l'ensemble mobile dans le coeur du réacteur et, par conséquent, à l'arrêt du réacteur.

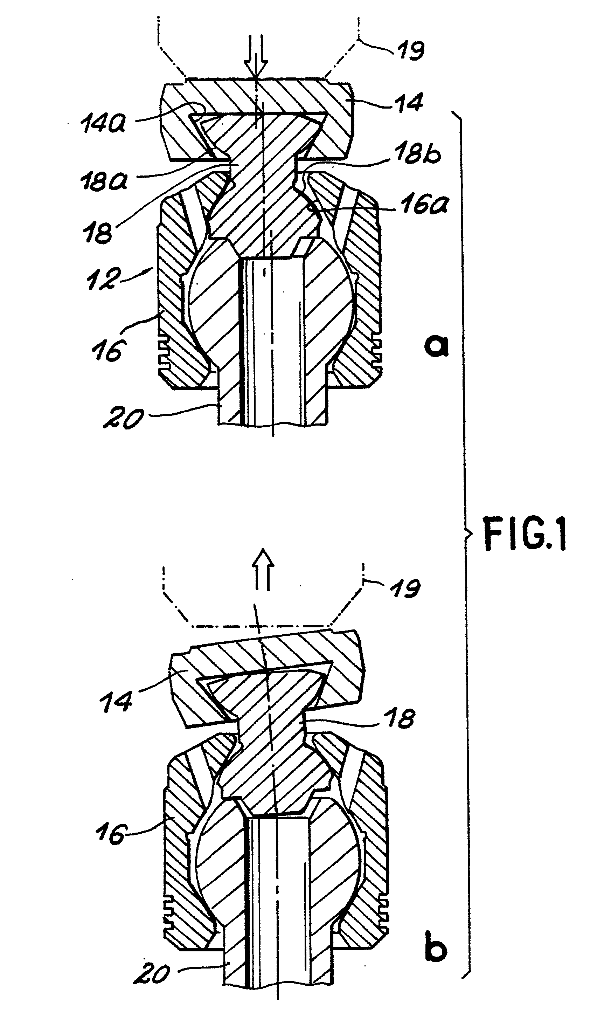

Des éléments absorbants réalisés de cette manière sont utilisés dans le réacteur français Phénix. Dans ce réacteur on a donné à la tête de l'ensemble mobile de chacun des éléments absorbants d'arrêt complémentaire une forme particulière représentée en coupe longitudinale sur les figures 1a et 1b.

Sur ces figures, on voit que la tête 12 de l'ensemble mobile comprend une pièce supérieure 14, une pièce inférieure 16 et une pièce intermédiaire 18 par laquelle la pièce 16 est reliée à la pièce 14. La pièce supérieure 14 comporte une face supérieure plane apte à s'appliquer contre l'électro-aimant 19 de la tige de manoeuvre. La pièce inférieure 16 est creuse et sert de logement à l'extrémité supérieure sphérique du corps 20 de l'ensemble mobile de l'élément absorbant. La pièce intermédiaire de liaison 18 présente quant à elle approximativement la forme d'un diabolo à calotte sphérique. La partie supérieure de cette pièce 18 est logée dans un évidement formé sur la face inférieure de la pièce 14 et elle présente une portée hémisphérique 18a apte à venir en appui sur le bord tronconique 14a de l'évidement. De même, la partie inférieure de la pièce 18 est logée dans la pièce 16 en forme de boîtier, au-dessus de l'extrémité supérieure sphérique du corps 20 et elle présente également une portée hémisphérique 18b apte à venir en appui sur une surface tronconique 16a de la pièce 16.

La figure 1a représente la partie supérieure de l'ensemble mobile lorsque cet ensemble a chuté dans le coeur du réacteur. Le fond plan de l'évidement formé sur la face inférieure de la pièce 14 repose alors par gravité sur la face supérieure plane de la pièce intermédiaire 18. De même, la pièce intermédiaire 18 comporte à son extrémité inférieure une face annulaire plane qui repose par gravité sur la face supérieure plane de la rotule du corps 20. Compte tenu des jeux existant entre les différentes pièces, il peut alors exister un décalage entre les axes verticaux de celles-ci, comme on l'a représenté de façon volontairement amplifiée sur la figure 1a.

Lorsqu'on remonte l'ensemble mobile à l'aide de l'électro-aimant 19, la pièce inférieure 16 se trouve suspendue à la pièce supérieure 14 par la venue en contact des portées hémisphériques 18a, 18b formées sur la pièce intermédiaire 18 avec les surfaces tronconiques en vis-à-vis 14a, 16a formées dans les pièces 14 et 16. S'il existe un décalage important entre les axes des pièces 14, 16 et 18 au moment de la préhension de l'ensemble mobile par l'électro-aimant 19, il peut se produire un pivotement relatif entre les différentes pièces, lors de la phase d'armement au cours de laquelle l'ensemble mobile est amené dans la partie haute du boîtier. Comme l'illustre de façon volontairement accentuée la figure 1b, il peut alors se produire un lâcher intempestif de l'ensemble mobile de l'élément absorbant. Cela n'est évidemment pas souhaitable en raison des perturbations qui en résultent pour le fonctionnement du réacteur.

La présente invention a précisément pour objet un élément absorbant d'un type nouveau ne présentant pas de risque de lâcher intempestif de l'ensemble mobile.

A cet effet et conformément à l'invention, il est proposé un élément absorbant comprenant un boîtier destiné à être placé verticalement dans le coeur d'un réacteur nucléaire à neutrons rapides, et un ensemble mobile apte à se déplacer verticalement à l'intérieur dudit boîtier entre une position haute et une position basse, ledit ensemble mobile comportant un corps réalisé en un matériau absorbant les neutrons et muni d'une tête de préhension apte à être suspendue à un électro-aimant, ladite tête de préhension comprenant:

- une pièce supérieure présentant une face supérieure apte à venir au contact de l'électro-aimant et une face inférieure comportant une couronne de centrage; et

- une pièce inférieure, caractérisé en ce que ladite pièce inférieure présente une face supérieure comportant une portée de centrage sur laquelle vient en appui par gravité ladite couronne de centrage de la pièce supérieure, lorsque l'ensemble mobile n'est pas suspendu à l'électro-aimant; ladite tête de préhension comprenant de plus

- une pièce intermédiaire suspendu à ladite pièce supérieure par un organe déformable de longueur donnée, cette pièce intermédiaire présentant une surface supérieure horizontale sur laquelle vient en appui un épaulement horizontal tourné vers le bas formé sur ladite pièce inférieure, lorsque l'ensemble mobile est suspendu à l'électro-aimant, la longueur dudit organe déformable étant telle que ladite surface supérieure horizontale est espacée dudit épaulement lorsque la couronne de centrage est en appui sur ladite portée de centrage.

Selon un mode de réalisation préféré de l'invention, le corps de l'ensemble mobile comprend à son extrémité supérieure une rotule articulée dans ladite pièce inférieure.

Selon ce même mode de réalisation préféré de l'invention, la pièce inférieure a la forme d'un piston reçu de façon coulissante entre deux butées de fin de course dans un cylindre d'amortissement de fin de chute muni d'orifices de section réduite et venant en appui sur un limiteur de chute formé dans le boîtier, lorsque l'ensemble mobile approche de sa position basse.

On décrira maintenant, à titre d'exemple non limitatif, un mode de réalisation préféré de l'invention en se référant aux dessins annexés dans lesquels :

- les figures 1a et 1b, déjà décrites, sont des vues en coupe longitudinale de la tête de l'ensemble mobile d'un élément absorbant selon la technique antérieure illustrant respectivement la position occupée par les pièces qui la constituent lors de la phase de préhension et lors de la phase d'armement ;

- la figure 2 est une vue de côté et en coupe illustrant de façon très schématique un réacteur nucléaire à neutrons rapides équipé d'éléments absorbants conforme à l'invention ;

- les figures 3a, 3b et 3c sont des vues en coupe longitudinale représentant la partie haute d'un élément absorbant conforme à l'invention respectivement lors de la phase de préhension de l'ensemble mobile par la tige de manoeuvre, dans une position intermédiaire lors de la phase d'armement et à la fin de la phase d'armement ; et

- les figures 4a et 4b sont des vues comparables aux figures 1a et 1b représentant la tête de l'ensemble mobile d'un élément absorbant réalisé conformément à l'invention, respectivement lors de la phase de préhension et lors de la phase d'armement.

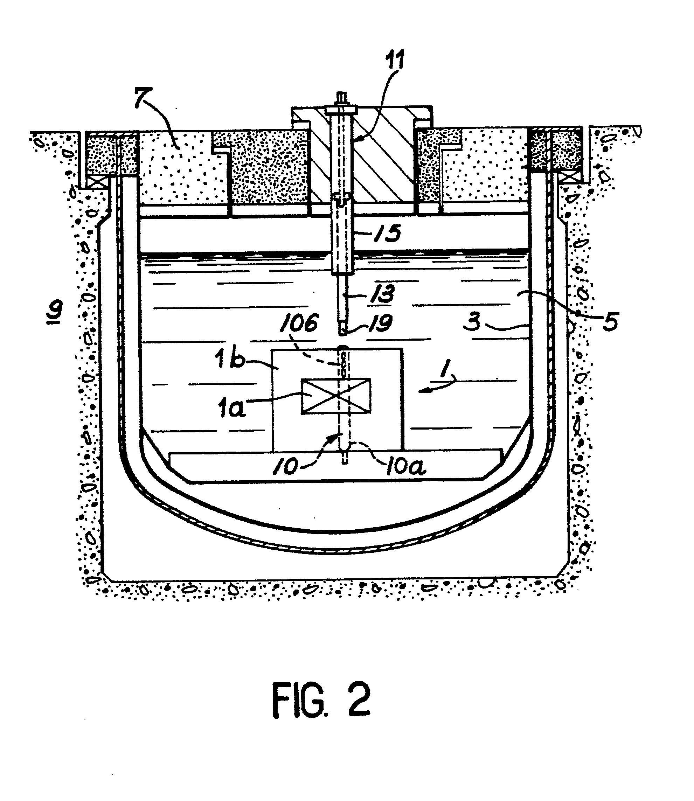

Sur la figure 2, on a représenté très schématiquement et seulement en partie un réacteur nucléaire à neutrons rapides de type intégré tel que les réacteurs français Phénix et Super Phénix.

Pour la bonne compréhension de l'invention, on rappelle simplement ici que, dans un tel réacteur, le coeur 1 ainsi que les différents composants du circuit primaire tels que les échangeurs de chaleur et les pompes (non représentés) sont situés à l'intérieur d'une cuve 3 remplie de sodium liquide 5. La cuve 3 est obturée à son extrémité supérieure par une dalle de béton 7 dont la périphérie repose sur une enceinte de béton 9 dans laquelle est logée la cuve 3.

De façon connue, le coeur 1 du réacteur est constitué par un grand nombre d'assemblages de combustible nucléaire entourés par des assemblages en matériau fertile, l'ensemble de ces assemblages étant disposé selon un réseau régulier, par exemple hexagonal.

Parmi les assemblages de combustible nucléaire dont la partie centrale forme la zone 1a du coeur, on dispose en des emplacements déterminés des éléments absorbants 10 servant à assurer le pilotage et l'arrêt d'urgence du réacteur. Les éléments absorbants 10 destinés à assurer l'arrêt d'urgence comprennent un boîtier creux et allongé 10a d'axe vertical placé parmi les assemblages de combustible nucléaire du coeur et un ensemble 10b mobile verticalement à l'intérieur du boîtier 10a. Chaque ensemble mobile 10b comprend une tête et un corps réalisé au moins en partie en un matériau absorbant les neutrons.

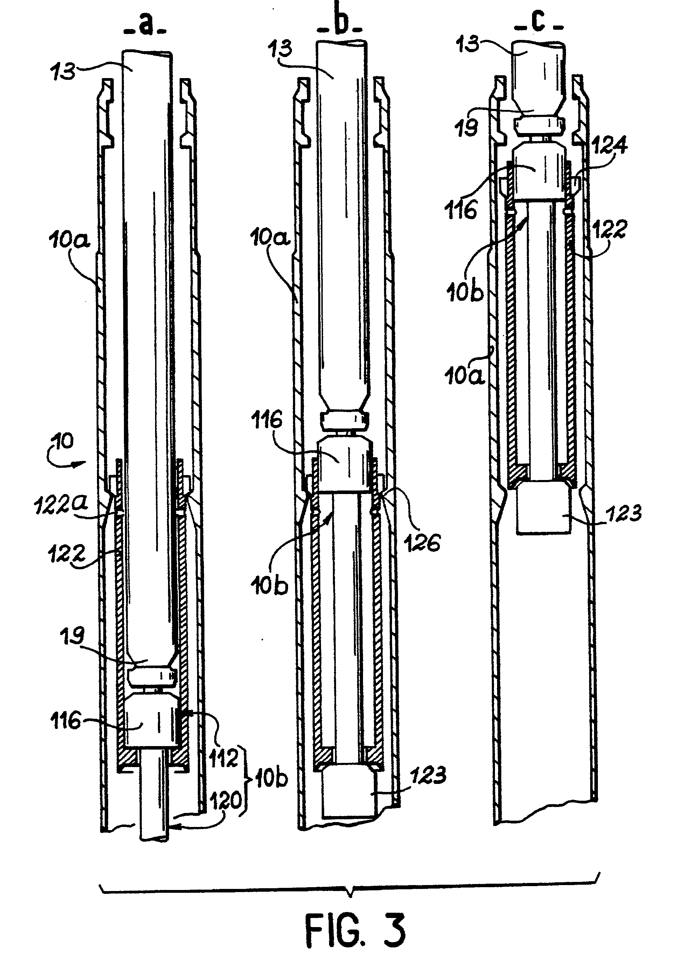

Le déplacement de chacun des ensembles mobiles 10b à l'intérieur de leur boîtier 10a est obtenu au moyen d'un mécanisme de commande 11 suspendu à la dalle 7. Ce mécanisme, qui peut notamment être réalisé de la manière décrite dans le brevet français n⁰ 73-39717, comprend principalement une tige de manoeuvre 13 coulissant verticalement à l'intérieur d'un manchon de guidage 15 et portant à son extrémité inférieure un électro-aimant 19 dans le cas des éléments 10 assurant l'arrêt d'urgence. Comme l'illustrent les figures 3a à 3c les diamètres de la tige 13 et de l'électro-aimant 19 sont inférieurs au diamètre intérieur du boîtier 10a afin qu'ils puissent pénétrer par l'extrémité supérieure ouverte de ce dernier.

L'alimentation électrique des électro-aimants 19 crée une liaison magnétique entre ces électro-aimants et les têtes des ensembles mobiles 10b. Ces derniers peuvent ainsi être suspendus aux extrémités inférieures des tiges de manoeuvre 13.

Lorsque l'alimentation électrique des électro-aimants 19 est interrompue, la liaison magnétique par laquelle les ensembles mobiles 10b étaient suspendus aux tiges de manoeuvre 13 est rompue, de telle sorte que les ensembles mobiles absorbants chutent dans le fond de leur boîtier 10a. On réalise ainsi l'arrêt du réacteur.

La dalle 7 supporte normalement autant de mécanismes de commande 11 que le coeur comporte d'éléments absorbants 10. De plus, l'axe vertical de la tige de manoeuvre 13 de chacun des mécanismes 11 est normalement aligné avec l'axe vertical du boîtier 10a de l'élément absorbant correspondant. Ainsi, après la chute des éléments 10 assurant l'arrêt d'urgence, la descente des tiges de manoeuvre 13 dans le sodium 5 contenu dans la cuve 3 du réacteur permet d'amener les électro-aimants 19 en contact avec la tête de chacun des ensembles mobiles 10b.

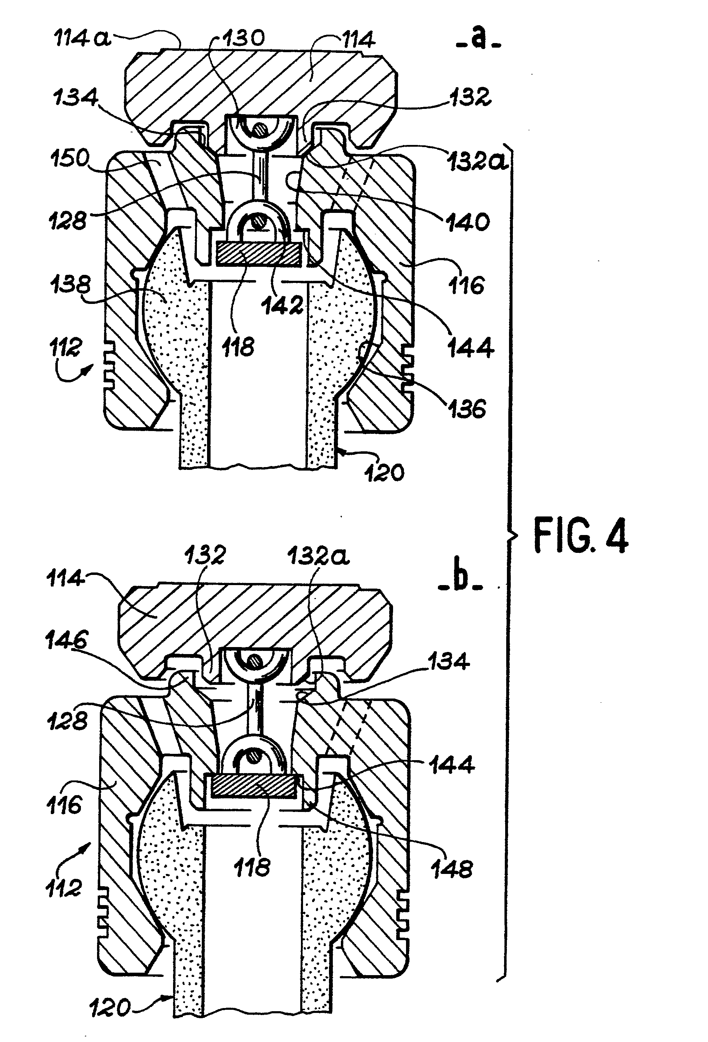

Un élément absorbant conforme à l'invention va maintenant être décrit plus en détail en se référant aux figures 3a à 3c, puis aux figures 4a et 4b.

Sur la figure 3a, on voit que le boîtier allongé 10a de l'élément absorbant 10 est évidé et ouvert à son extrémité supérieure pour permettre le passage de la tige de manoeuvre 13 du mécanisme de commande correspondant. Bien que cela n'apparaisse pas sur cette figure, le boîtier 10a présente en outre une section externe identique à celle d'un assemblage combustible nucléaire du coeur, par exemple de forme hexagonale.

L'ensemble mobile 10b de l'élément absorbant 10 comprend principalement une tête 112 et un corps 123 suspendu à cette tête par l'intermédiaire d'une tige 120. De façon connue, le corps 123 est réalisé au moins en partie en un matériau absorbant les neutrons, afin que son introduction dans la zone fissile du coeur du réacteur ait pour effet de ralentir ou de stopper la réaction de fission qui se produit dans cette zone.

La structure du corps 123 de l'ensemble mobile de l'élément absorbant est réalisée de façon connue, par exemple sous forme d'un ensemble articulé, afin qu'une déformation éventuelle du boîtier 10a n'ait pas pour effet d'empêcher la chute de cet ensemble dans le boîtier.

Dans le mode de réalisation représenté sur la figure 3a, l'ensemble mobile 10b de l'élément absorbant 10 comprend de plus à sa partie supérieure un cylindre 122 dans lequel est reçue de façon coulissante la tête 112 de l'ensemble mobile. De façon plus précise, une partie inférieure 116, en forme de piston, de la tête 112 est reçue de façon coulissante à l'intérieur du cylindre 122, entre une position basse illustrée sur la figure 3a, une position médiane illustrée sur la figure 3b et une position haute illustrée sur la figure 3c. Le cylindre 122 étant rempli de sodium liquide 5, il constitue avec la partie 116 en forme de piston un amortisseur de fin de chute pour l'ensemble mobile 10b de l'élément absorbant.

Dans la position d'armement représentée sur la figure 3c, dans laquelle l'ensemble mobile 10b est suspendu à l'électro-aimant 19 dans la partie haute du boîtier 10a, la partie 116 en forme de piston occupe sa position haute à l'intérieur du cylindre 122.

Si l'ensemble mobile 10b chute à l'intérieur du boîtier 10a, des ergots 124 formés à l'extérieur du cylindre 122 viennent en appui sur une collerette 126 formée à l'intérieur du boîtier 10a lorsque l'ensemble mobile approche du fond du boîtier. Cette position correspond à la position de l'ensemble mobile 10b représentée sur la figure 3b.

Pour parvenir jusqu'à la position basse représentée sur la figure 3a, la partie 116 en forme de piston doit chasser le sodium liquide emprisonné dans le cylindre 122 par des orifices 122a percés dans ledit cylindre. La fin de la chute de l'ensemble mobile 10b est donc amortie.

On décrira maintenant plus en détail en se référant aux figures 4a et 4b la structure de la tête 112 de l'ensemble mobile d'un élément absorbant réalisé conformément à l'invention.

La tête 112 de l'ensemble mobile comprend principalement une pièce supérieure 114, une pièce inférieure 116, une pièce intermédiaire 118 et un maillon de chaîne 128 par lequel la pièce intermédiaire 118 est suspendue à la pièce supérieure 114.

De façon plus précise, la pièce supérieure 114 comprend une face supérieure plane 114a destinée à venir en contact avec la face inférieure plane de l'entrefer de l'électro-aimant 19 (figure 2). La face inférieure de la pièce 114 porte en son centre un demi-maillon de chaîne 130 auquel est accroché le maillon 128. Le demi-maillon 130 est entouré par une couronne de centrage 132 dont l'extrémité définit une portée 132a de section incurvée, notamment en forme de segment sphérique.

Sur sa face supérieure, la pièce 116 présente une portée tronconique 134 sur laquelle peut venir en appui la portée 132a formée sur la couronne de centrage 132. En outre, la pièce 116 comporte un évidement central 136 dans lequel est reçue de façon à former une rotule une partie supérieure sphérique 138 de la tige 120 de l'ensemble mobile.

La pièce inférieure 116 présente de plus un passage axial 140 traversant cette pièce selon son axe vertical, depuis l'évidement 136 jusqu'à sa face supérieure. Ce passage 140 sert à loger le maillon de chaîne 128 ainsi que la pièce intermédiaire 118. Cette pièce 118 porte au centre de sa face supérieure un demi-maillon de chaîne 142 par lequel elle est suspendue au maillon 128. En outre, la périphérie plane et normalement horizontale de cette pièce 118 est placée en vis-à-vis d'un épaulement plan et horizontal 144 tourné vers le bas, formé dans le passage 140.

Conformément à une caractéristique importante de l'invention, lorsque l'extrémité de la couronne de centrage 132 est en appui sur la portée tronconique 134 de la pièce 116, la face supérieure de la pièce intermédiaire 118 est éloignée de l'épaulement 144, comme l'illustre la figure 4a. Au contraire, et comme l'illustre la figure 4b, lorsque la tête 112 est suspendue à l'électro-aimant 19, la pièce 116 repose par l'épaulement 144 sur la face supérieure de la pièce 118. La portée tronconique 134 est alors éloignée de l'extrémité de la portée 132a formée sur la couronne de centrage 132 de la pièce 114.

La pièce inférieure 116 présente sur sa face supérieure une excroissance annulaire 146 venant entourer la couronne de centrage 132 de la pièce 114. De même, une excroissance annulaire 148 de la pièce 116 se prolonge au-delà de l'épaulement 144 à l'intérieur de l'évidement 136, autour de la pièce 118. Ces deux excroissances permettent d'éviter tout déboîtement accidentel des différentes pièces. Pour permettre la circulation du sodium, la pièce 116 en forme de piston comporte en outre des trous 150 qui la traversent depuis l'évidement central 136 jusqu'à sa face supérieure, autour des excroissances 146 et 148.

La structure de la tête 112 de l'ensemble mobile de l'élément absorbant qui vient d'être décrit permet de supprimer les risques de décrochage accidentels résultant de la position aléatoire prise par les différentes pièces constituant la tête après la chute de l'ensemble mobile.

En effet, lorsque l'ensemble mobile a chuté dans le fond du boîtier, les différentes pièces qui en constituent la tête prennent les positions représentées sur la figure 4a. En particulier, la pièce supérieure 114 repose par gravité sur la pièce inférieure 116 par l'intermédiaire de la couronne de centrage 132 et de la portée tronconique 134. La pièce 116 repose elle-même par gravité et par l'intermédiaire de son évidement 136 sur la sphère 138 formée à l'extrémité supérieure de la tige 120. Dans cette position, la pièce intermédiaire 118 n'est pas en contact avec la pièce inférieure 116 et sa face supérieure est maintenue en position parfaitement horizontale grâce au maillon de chaîne 128 qui la relie à la pièce 114.

Lorsqu'on vient assurer la préhension de l'ensemble mobile à l'aide de l'électro-aimant 19 dans cette position de la figure 4a, pour remonter cet ensemble mobile jusqu'à la position d'armement illustré par la figure 3c, les différentes pièces constituant la tête 112 prennent la position illustrée par la figure 4b. En particulier, le contact entre la pièce supérieure 114 et la pièce inférieure 116 cesse pour être remplacé par le contact entre la pièce intermédiaire 118 et la pièce 116.

Un éventuel décalage initial entre les axes des différentes pièces et notamment des pièces 114 et 116 n'a pas de conséquence sur le maintien horizontal de la face supérieure 114a de la pièce 114. En effet, un éventuel décalage entre les axes des pièces 116 et 118 n'entraîne aucun couple de basculement puisque ces pièces sont en contact l'une de l'autre par des surfaces planes et la suspension de la pièce 118 à la pièce 114 par le maillon de chaîne 128 permet de garantir un parfait alignement des axes de ces deux pièces avant que la face supérieure de la pièce 118 ne vienne au contact de l'épaulement 144 de la pièce 116.

Par conséquent, la structure de la tête 112 de l'ensemble mobile de l'élément absorbant selon l'invention permet d'éviter tout risque de chute intempestive de cet ensemble mobile, contrairement à la structure selon la technique antérieure décrite précédemment en se référant à la figure 1.

Bien entendu, l'invention n'est pas limitée au mode de réalisation qui vient d'être décrit à titre d'exemple. En particulier, l'ensemble constitué par le maillon de chaîne 128 et par les demi-maillons 130 et 142 peut être remplacé par tout organe déformable de longueur donnée tel qu'un câble ou une chaîne à plusieurs maillons.

## Revendications

1. Elément absorbant comprenant un boîtier (10a) destiné à être placé verticalement dans le cœur (1) d'un réacteur nucléaire à neutrons rapides, et un ensemble mobile (10b) apte à se déplacer verticalement à l'intérieur dudit boîtier (10a) entre une position haute et une position basse, ledit ensemble mobile (10b) comportant un corps (123) réalisé en un matériau absorbant les neutrons et relié par une tige (120) à une tête de préhension (112) apte à être suspendue à un électro-aimant (19), ladite tête de préhension (112) comprenant:
   – une pièce supérieure (114) présentant une face supérieure (114a) apte à venir au contact de l'électro-aimant (19) et une face inférieure comportant une couronne de centrage (132); et
   – une pièce inférieure (116), caractérisé en ce que ladite pièce inférieure présente une face supérieure comportant une portée de centrage (134) sur laquelle vient en appui par gravité ladite couronne de centrage (132) de la pièce supérieure (114) lorsque l'ensemble mobile (10b) n'est pas suspendu à l'électro-aimant (19); ladite tête de préhension comprenant de plus
   – une pièce intermédiaire (118) suspendu à ladite pièce supérieure (114) par un organe déformable de longueur donnée (128, 130, 142), cette pièce intermédiaire présentant une surface supérieure horizontale sur laquelle vient en appui un épaulement horizontal (144) tourné vers le bas, formé sur ladite pièce inférieure (116), lorsque l'ensemble mobile (10b) est suspendu à l'électro-aimant (19), la longueur dudit organe déformable (128, 130, 142) étant telle que ladite surface supérieure horizontale est espacée dudit épaulement (144) lorsque la couronne de centrage (132) est en appui sur ladite portée de centrage (134).

2. Elément absorbant selon la revendication 1, caractérisé en ce que ladite tige (120) dudit ensemble mobile (10b) comprend à son extrémité supérieure une rotule (138) articulée dans ladite pièce inférieure (116).

3. Elément absorbant selon l'une quelconque des revendications 1 et 2, caractérisé en ce que ladite pièce inférieure (116) a la forme d'un piston reçu de façon coulissante dans un cylindre d'amortissement (122) de fin de chute muni d'orifices (122a) de section réduite et venant en appui sur un limiteur de chute (126) formé dans le boîtier (10a), lorsque l'ensemble mobile (10b) approche de sa position basse.

4. Elément absorbant selon l'une quelconque des revendications 1 à 3, caractérisé en ce que ledit organe déformable comprend un maillon de chaîne (128) accroché à deux demi-maillons (130, 142) fixés respectivement au centre de la face inférieure de la pièce supérieure (114) et au centre de la face supérieure de la pièce intermédiaire (118).

## Claims

1. Absorber element comprising a casing (10a), intended to be placed vertically in the core (1) of a fast neutron nuclear reactor, and a movable assembly (10b) capable of being displaced vertically inside the said casing (10a) between a high position and a low position, the said movable assembly (10b) having a body (123) made of a neutron-absorbing material and connected by means of a rod (120) to a gripping head (112) capable of being suspended from an electromagnet (19), the said gripping head (112) comprising:
   – an upper part (114) exhibiting an upper face (114a) capable of coming into contact with the electromagnet (19) and a lower face having a centring collar (132); and

– a lower part (116), characterized in that the said lower part exhibits an upper face having a centring seat (134), on which the said centring collar (132) of the upper part (114) comes to rest as a result of gravity when the movable assembly (10b) is not suspended from the electromagnet (19); the said gripping head additionally comprising

– an intermediate part (118) suspended from the said upper part (114) by means of a deformable member of given length (128, 130, 142), this intermediate part having a horizontal upper surface on which a horizontal shoulder (144), oriented downwards and formed on the said lower part (116), comes to rest when the movable assembly (10b) is suspended from the electromagnet (19), the length of the said deformable member (128, 130, 142) being such that the said horizontal upper surface is separated from the said shoulder (144) when the centring collar (132) is resting on the said centring seat (134).

2. Absorber element according to Claim 1, characterized in that the rod (120) of the said movable assembly (10b) comprises at its upper end a ball joint (138) articulated in the said lower part (116).

3. Absorber element according to either one of Claims 1 and 2, characterized in that the said lower part (116) has the form of a piston slidably received in a cylinder (122) for damping the end of the fall, which is provided with orifices (122a) of small cross-section and comes to rest on a fall limiter (126) formed in the casing (10a) when the movable assembly (10b) approaches its low position.

4. Absorber element according to any one of Claims 1 to 3, characterised in that the said deformable member comprises a chain link (128) attached to two half-links (130, 142) fixed respectively to the centre of the lower face of the upper part (114) and to the centre of the upper face of the intermediate part (118).

**Patentansprüche**

1. Absorberstab mit einem Gehäuse (10a), das vorgesehen ist vertikal in dem Kern (1) eines Schnellneutronenkernreaktors angeordnet zu werden, und einer beweglichen Anordnung (10b), die geeignet ist, sich vertikal im Inneren des Gehäuses (10a) zwischen einer oberen und einer unteren Position zu bewegen, wobei die bewegliche Anordnung (10b) einen Körper aufweist (123), der aus einem Neutronen absorbierenden Material besteht und über einen Schaft (120) mit einem Greifkopf (112) verbunden ist, der geeignet ist an einem Elektromagneten (19) aufgehängt zu werden, wobei der Greifkopf aufweist:

– einen oberen Teil (114) mit einer oberen Fläche (114a), die geeignet ist, in Kontakt mit dem Elektromagneten (19) zu kommen, und mit einer unteren Fläche, die eine Zentrierkrone (132) aufweist; und

– einen unteren Teil (116), dadurch gekennzeichnet, daß der untere Teil eine obere Fläche mit einem Zentriersitz (134) aufweist, auf den sich durch die Schwerkraft die Zentrierkrone des oberen Teils (114) stützt, wenn die bewegliche Anordnung (10b) nicht an dem Elektromagneten (19) aufgehängt ist, wobei der Greifkopf weiterhin aufweist,

– ein Zwischenteil (118), das an dem oberen Teil (114) mittels einer verformbaren Anordnung gegebener Länge (128, 130, 142) aufgehängt ist, wobei dieses Zwischenteil eine horizontale, nach unten gedrehte, auf dem unteren Teil gebildete Schulter (144) stützt, wenn die bewegliche Anordnung (10b) an dem Elektromagneten (19) aufgehängt ist, wobei die Länge der verformbaren Anordnung (128, 130, 142) so ist, daß die obere, horizontale Oberfläche einen Zwischenraum zur Schulter (144) aufweist, wenn die Zentrierkrone (132) sich auf den Zentriersitz (134) stützt.

2. Absorberstab nach Anspruch 1, dadurch gekennzeichnet, daß der Schaft der beweglichen Anordnung (10b) an seinem oberen Ende ein in dem unteren Teil (116) gelagertes Kugelgelenk (138) aufweist.

3. Absorberstab nach einem der Ansprüche 1 und 2, dadurch gekennzeichnet, daß der untere Teil (116) die Form eines Kolbens besitzt, der gleitend in einem Fallende-Dämpfungszylinder (122) mit Öffnungen (122a) reduzierten Querschnitts gelagert ist und sich auf einen in dem Gehäuse (10a) gebildeten Fallbegrenzer (126) stützt, wenn die bewegliche Anordnung (10b) ihre untere Position erreicht.

4. Absorberstab nach einem der Ansprüche 1 bis 3, dadurch gekennzeichnet, daß die verformbare Anordnung ein Kettenglied (128) aufweist, das an zwei Halb-Kettenglieder (130, 142) aufgehängt ist, die jeweils in der Mitte der unteren Fläche des oberen Teils (114) und in der Mitte der oberen Flächen des Zwischenteils (118) befestigt sind.

FIG.1

EP 0 216 665 B1

FIG. 2

FIG. 3

FIG. 4